# EUROPÄISCHE PATENTSCHRIFT

(11) **EP 1 896 155 B1**
(45) Veröffentlichungstag und Bekanntmachung des Hinweises auf die Patenterteilung: **13.06.2012**
(21) Anmeldenummer: 06763855.1
(22) Anmeldetag: 22.06.2006
(51) Int. Cl.: B01D 35/153, B01D 29/21, B01D 35/147, F01M 11/03

(54) **FILTERANORDNUNG FÜR FLÜSSIGKEITEN**
LIQUID FILTERING DEVICE
DISPOSITIF DE FILTRATION POUR LIQUIDES

(30) Priorität: 30.06.2005 DE 202005010445 U
(43) Veröffentlichungstag der Anmeldung: 12.03.2008
(73) Patentinhaber: MANN + HUMMEL GMBH, 71638 Ludwigsburg (DE)
(72) Erfinder: LOOS, Rainer, 71691 Freiberg (DE); KOLCZYK, Markus, 74395 Mundelsheim (DE); LUCAS, Daniel, 50006 Zaragoza (ES); KRAMER, Jörg, 72379 Hechingen (DE); BLUM, Ralf, 84168 Aham (DE); JAINEK, Herbert, 74074 Heilbronn (DE); EPLI, Sven, 74078 Heilbronn (DE)
(74) Vertreter: Seyboth, Matthias
(86) Internationale Anmeldenummer: PCT/EP2006/063462
(87) Internationale Veröffentlichungsnummer: WO 2007/003517

(56) Entgegenhaltungen:
- DE-A1- 1 935 764
- DE-A1- 2 328 936
- DE-A1- 2 916 198
- DE-A1- 4 201 041
- DE-A1- 10 035 555
- DE-A1- 10 046 494
- DE-A1- 10 248 907
- US-A- 3 589 517
- US-A- 3 957 640
- US-A- 5 362 390
- US-A- 5 904 357

## Beschreibung

### Technisches Gebiet

Die Erfindung betrifft eine Filteranordnung für Flüssigkeiten, insbesondere für Öl oder Kraftstoff einer Brennkraftmaschine, nach dem Oberbegriff des Hauptanspruchs.

### Stand der Technik

Filterelemente für die Flüssigfiltration von viskosen Medien wie Öl oder Kraftstoff werden in herkömmlicher Weise aus plissierten Filtermedien vorzugsweise in zylindrischer Form hergestellt. Diese Filterelemente können dabei metallfrei und mit einer Endscheiben aus Folie, Pappe, einem Kunststoff, z.B. PA, oder ähnlichem versehen sein. Es sind aber Ausführungen mit Metallendscheiben und einem Metallmittelrohr möglich. Die Falten der Filterelemente sind dabei oft in die Endscheiben eingebunden, zum Beispiel verklebt, verschweißt oder geschäumt und verbinden diese Elemente dann direkt.

Die Ausführungen mit einem Mittelrohr zur Aufnahme der Filterelemente sind oft so gestaltet, dass die gegenseitige Abdichtung der Roh- und Reinseite in der Strömung des zu filternden Mediums durch einen auf das Mittelrohr aufgezogenen O-Ring erfolgt, wobei dieser dann bei einem Service gewechselt werden kann.

Es ist beispielsweise aus der DE 100 46 494 A1 bekannt, bei einem Ölfilter für die Reinigung des Öls einer Brennkraftmaschine ein metallfreies Filterelement zu verwenden. Dieses Filterelement wird in ein Gehäuse eingeschoben und das Gehäuse mit einem Deckel verschlossen. In dem Gehäuse ist zur Verringerung des Ölrücklaufs beim Stillstand der Brennkraftmaschine üblicherweise ein Rücklaufsperrventil vorgesehen. Hier ist mindestens eine Dichtung am Filterelement derart angeordnet, dass sie in einem vorgegebenen axialen Bewegungsbereich dichtend an einer Gehäusewand des Filtergehäuses anliegt.

Zur Vermeidung des Leerlaufens des Filtergehäuses in Rohrichtung wird aber auch häufig ein in das Gehäuse dauerhaft eingebrachtes federbelastetes Ventil verwendet. Diese Rücklaufsperrventile werden in einem separaten Montageschritt in das Gehäuse eingesetzt und die Rücklaufsperrventile bestehen üblicherweise aus einem Ventilteller, der mit einer Feder vorgespannt ist, einer Ventilkrone und einem Ventilsitz. Das Ventil wird in das Gehäuse eingeschraubt oder eingesteckt, wobei es in der Regel nachteilig ist, dass dieses Bauelement aufwendig zu montieren ist.

Beispielsweise ist in der DE 42 40 656 C2 eine weitere Filteranordnung für Kraft- und/oder Schmierstoffe eines Verbrennungsmotors beschrieben, bei der ein Bodenablauf vorgesehen ist, der durch eine Endscheibe des Filterelementes beim Einsetzen des Filterelements verschlossen wird. Dieser Ablauf wird geöffnet, sobald das Filterelement entnommen wird, so dass das Öl durch diese Ablaufbohrung in einen Auffangbehälter abfließen kann. Es ist aus diesem Stand der Technik auch ein Rücklaufsperrventil zu entnehmen, welches aus einer Metallplatte besteht, die von einer Feder beaufschlagt ist und die Rohölzulaufbohrung abdichtet. Hierzu sind verschiedene Ventilkomponenten erforderlich.

Außerdem ist noch aus der US 5,413,712 A ein Filter für Flüssigkeiten bekannt, bei dem die Endscheiben des zylindrischen Filterelements aus einem Kunststoff hergestellt sind, der mit dem Filterelement verbunden ist. Als Rücklaufsperrmembran ist hier eine zusätzliche radial dichtende Gummimembran angeordnet, die an der Endscheibe anliegt und beim Einbau mit eingefügt wird.
Des Weiteren beschreibt die DE 100 35 555 A1 eine auswechselbare Filterpatrone mit einem Stützkörper. An dem Stützkörper ist eine Dichtmembran angebracht, die über eine Dichtkante als Rücklaufsperre den Einlass eines Filtergehäuses verschließt und gleichzeitig eine radiale Dichtfläche zur Abdichtung zwischen dem Stützkörper und einem Auslassstutzen aufweist.

### Offenbarung der Erfindung

Der Erfindung liegt die Aufgabe zugrunde, eine Filteranordnung nach dem Oberbegriff des Hauptanspruchs auf einfache Weise so fortzubilden, dass ein Rücklaufsperrventil auf einfache Weise herstellbar und im Filtergehäuse anbringbar ist.

Die erfindungsgemäße Filteranordnung für Flüssigkeiten besitzt gattungsgemäß ein zylindrisches Filterelements, das axial in ein Filtergehäuse einführbar ist, wobei das Filterelement nach der Montage den Verschluss einer Rücklaufvorrichtung für die zu filternde Rohflüssigkeit mit mindestens einer am Filterelement gehaltenen Dichtung als Rücklaufsperrmembran bewirkt. In vorteilhafter Weise ist die erfindungsgemäße Filteranordnung so ausgebildet, dass die Rücklaufsperrmembran an einem Funktionsträger der Filteranordnung derart angebracht ist, dass sie eine axiale und/oder radiale Abdichtung der Roh- und Reinseite der Filteranordnung bewirkt.

Die zu filternden Flüssigkeiten können beispielsweise Kraft- und/oder Schmierstoffe für einen Verbrennungsmotor in einem Kraftfahrzeug oder aber auch Wasser sein. Bevorzugt kann die Rücklaufsperrmembran dabei an einem axialen Fortsatz des Funktionsträgers derart angebracht werden, dass sich eine axial in vorgegebenen Grenzen flexible Anlage der Rücklaufsperrmembran an die Dichtungsflächen der Filteranordnung ergibt.

In besonders vorteilhafter Weise ist dabei der axiale Fortsatz des Funktionsträgers so bemessen, dass mit diesem bei Anlage auf einem Absatz des Filtergehäuses ein Anschlag gebildet ist. Durch eine vorteilhafte Bemessung der Länge des Fortsatzes ist dann nach dem Einfügen des Filterelements und dem Anschlag am Absatz durch den verbleibenden Raum für ein flexibles Verformen der Rücklaufsperrmembran eine vorgebbare Vorspannung der an der Dichtungsfläche anliegenden Rücklaufsperrmembran bewirkbar.

Erfindungsgemäß ist bei einer vorteilhaften Ausführungsform der Funktionsträger eine fest mit dem Filterelement verbundene Endscheibe, an das die Rücklaufsperrmembran angefügt ist, wobei die Endscheibe so ausgeführt ist, dass hier radiale Nasen angebracht sind, die seitlich in entsprechende Ausnehmungen des Filtergehäuses eingreifen und dass die Ausnehmungen hierbei ebenso so bemessen sind, dass mit diesen bei Anlage der radialen Nasen ein Anschlag gebildet ist, damit dass durch den verbleibenden Raum eine vorgebbare Vorspannung bei der Anlage der Rücklaufsperrmembran an der Dichtungsfläche des Filtergehäuses herstellbar ist.

Mit der zuvor genannten Ausführungsform kann eine korrekte Montage gewährleistet werden, da hiermit sichergestellt ist, dass die Vorspannung der Rücklaufsperrmembran nicht zu groß ist, dass das Filterelement durch den Anschlag nicht nach unten durchsackt und dass ein nicht korrekt montiertes Filterelement auf seinen Dichtsitz geschoben wird.

Alternativ zu der Erfindung kann es auch vorteilhaft sein, wenn der Funktionsträger ein fest mit dem Filterelement verbundenes metallfreies Mittelrohr ist, an das die Rücklaufsperrmembran fest angefügt ist. Am Mittelrohr wird somit auf einfache Weise eine Membran, zum Beispiel aus einem Elastomer, angebracht, die verhindert, dass das Filtergehäuse bei einer entsprechenden Einbausituation leer läuft. Die Membran ist dabei so ausgebildet, dass sie mit einem entsprechenden Ansatz an das Filtergehäuse axial oder radial dichtend zwischen der Roh und Reinseite wirkt. Die Rücklaufsperrmembran ist bei dieser Ausführungsform wechselbar und wird dem Filterelement gewechselt.

Gemäß einer anderen Alternative zur Erfindung ist der Funktionsträger ein fest im Gehäuse der Filteranordnung angebrachtes metallfreies Mittelrohr, an das die Rücklaufsperrmembran fest angefügt ist. Dabei muss die Ausführung des Mittelrohres jedoch so sein, dass das Filterelement zum Deckel hin ausgebaut werden kann. Die Membran muss dazu aus einem dauerhaften und für die Fahrzeuglebensdauer ausgelegten Material, zum Beispiel einem entsprechenden Elastomer, bestehen. Das Material des Mittelrohres ist in Grenzen wählbar, sollte aber vollveraschbar sein, so dass hier insbesondere Kunststoffe wie PA, PP, PE, POM, PUR oder vergleichbare Materialien vorteilhaft sind.

Erfindungsgemäß ist der Funktionsträger aber eine fest mit dem Filterelement verbundene Endscheibe, an die die Rücklaufsperrmembran angefügt ist. Im Falle einer zweiten erfindungsgemäßen Variante und auch für viele Anwendungsfälle sehr vorteilhaft ist es, wenn der Funktionsträger eine mittels einer Schnappverbindung mit dem Filterelement verbundene Endscheibe ist, an das die Rücklaufsperrmembran angefügt ist. Hierbei können beim Aufschnappen bzw. beim axialen Aufschieben auf die Endfläche des Filterelements radiale Schnappnasen seitlich in die Zwischenräume der gefalteten Filterbahnen des Filterelements über der axialen Verklebung der Filterbahnen eingreifen und somit eine lösbare Verbindung herstellen. Dabei können auch elastomere Erweiterungen der Rücklaufsperrmembran, die am Funktionsträger gehalten sind radial und/oder axial zwischen dem Funktionsträger und dem Filterelement zur Abdichtung eingequetscht werden.

Ein solches aus der Rücklaufsperrmembran und dem Funktionsträger gebildetes Bauteil kann auf einfache Weise unabhängig vom Filterelement vorgefertigt werden und erst beim Einbau des Filterelements durch einfache Handgriffe angefügt und evtl. auch wieder entfernt werden.

Die Rücklaufsperrmembran kann in allen zuvor beschriebenen Ausführungen mit dem Funktionsträger durch kleben, verschweißen oder mittels eines Zwei-Komponenten-Verfahrens fest verbunden werden. Alternativ ist jedoch auch eine lösbare Verbindung der Rücklaufsperrmembran mit dem Funktionsträger durch Einknüpfen möglich.

Durch die platzsparende Ausführung der erfindungsgemäßen Rücklaufsperrmembran als Ventil kann das Filtergehäuse sehr kompakt ausgeführt werden. Die Rücklaufsperrmembran lässt sich kostengünstig herstellen und anbringen und ist daher kostengünstiger als ein aus dem Stand der Technik bekanntes federbelastetes Korbventil. Die erfindungsgemäße Rücklaufsperrmembran kann dabei auch als Formteil ausgeführt werden und in vorteilhafter Weise die Dichtfunktion eines O-Ringes für die sonst notwendige Abdichtung zwischen der Roh- und Reinseite der Filteranordnung übernehmen, so dass dieser ebenfalls entfallen kann.

### Kurze Beschreibung der Zeichnungen

Ausführungsbeispiele der erfindungsgemäßen Filteranordnung werden anhand der Figuren der Zeichnung erläutert. Es zeigen:
Figur 1 einen Schnitt durch einen prinzipiellen Aufbau einer Filteranordnung für Flüssigkeiten nach dem Stand der Technik,
Figur 2a eine schematische Darstellung eines Filterelements für eine Filteranordnung nach der Figur 1 mit einer Rücklaufsperrmembran und einer axialen Abdichtung der Rohseite im Flüssigkeitsstrom,
Figur 2b eine schematische Darstellung eines Filterelements für eine Filteranordnung nach der Figur 1 mit einer Rücklaufsperrmembran und einer radialen Abdichtung der Rohseite im Flüssigkeitsstrom,
Figur 3a eine Detaildarstellung einer radial dichtenden Rücklaufsperrmembran mit einer Zwei-Komponenten-Anbringung an einer Endscheibe des Filterelements,
Figur 3b eine Detaildarstellung einer axial dichtenden Rücklaufsperrmembran mit einer Zwei-Komponenten-Anbringung an einer Endscheibe des Filterelements,
Figur 3c eine Detaildarstellung einer radial dichtenden Rücklaufsperrmembran, die an einer Endscheibe des Filterelements angeknüpft ist,
Figur 3d eine Detaildarstellung einer axial dichtenden Rücklaufsperrmembran, die an einer Endscheibe des Filterelements angeknüpft ist,
Figur 3e eine Detaildarstellung einer anderen Ausführungsform einer axial dichtenden Rücklaufsperrmembran, die an einer Endscheibe des Filterelements angeknüpft ist,
Figur 4 eine schematische Darstellung einer axial dichtenden Rücklaufsperrmembran, die alternativ zur erfindungsgemäßen Rücklaufsperrmembran an einem zweiteilig verschnappten Mittelrohr für ein Filterelement angebracht ist,
Figur 5 eine schematische Darstellung einer axial dichtenden Rücklaufsperrmembran, die alternativ zur erfindungsgemäßen Rücklaufsperrmembran an einem einteiligen Mittelrohr für ein Filterelement angebracht ist,
Figur 6 eine schematische Darstellung einer radial dichtenden Rücklaufsperrmembran, die alternativ zur erfindungsgemäßen Rücklaufsperrmembran an einem einteiligen Mittelrohr für ein Filterelement angebracht ist,
Figur 7 eine weitere schematische Darstellung einer Rücklaufsperrmembran, die alternativ zur erfindungsgemäßen Rücklaufsperrmembran an einem verlängerten Mittelrohr für ein Filterelement angebracht ist,
Figuren 8a bis 8c weitere Ausführungsbeispiele von Anbringungen der Rücklaufsperrmembran am Mittelrohr nach der Figur 7,
Figur 9 ein Ausführungsbeispiel der Erfindung mit einer Endscheibe am Filterelement, die einen Anschlag zur Erzeugung einer definierten Vorspannung für die Rücklaufsperrmembran aufweist,
Figur 10 ein Ausführungsbeispiel der Erfindung, das eine Endscheibe mit einer Rücklaufsperrmembran aufweist und mittels einer Schnappverbindung an das Filterelement anfügbar ist und
Figur 11 eine Draufsicht auf eine Ausführung einer Endscheibe mit radialen Nasen.

### Ausführungsform(en) der Erfindung

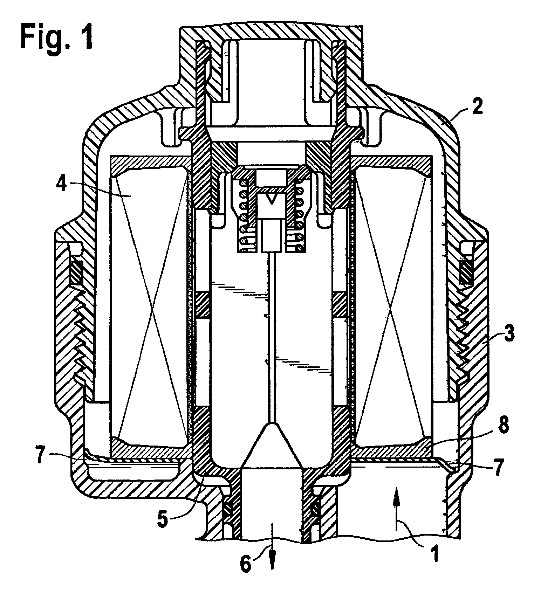

In Figur 1 ist eine Filteranordnung gezeigt, die prinzipiell der aus dem Stand der Technik DE 100 46 494 A1 bekannten Filteranordnung für Kraft-oder Schmierstoff für einen Verbrennungsmotor entspricht. Die zu filternde Rohflüssigkeit fließt durch einen Zulauf 1 in das Filtergehäuse ein, das aus einem Oberteil 2 und einem Unterteil 3 besteht. Im Filtergehäuse befindet sich ein Filterelement 4 aus zickzackförmig gefaltetem Filterpapier, das auf ein Mittelrohr 5 gesteckt ist und beim Zusammenfügen des Filtergehäuses fest eingespannt wird. Die Rohflüssigkeit durchströmt das Filterelement 4 und tritt auf der Reinseite durch das Mittelrohr 5 durch den Ablauf 6 wieder aus.

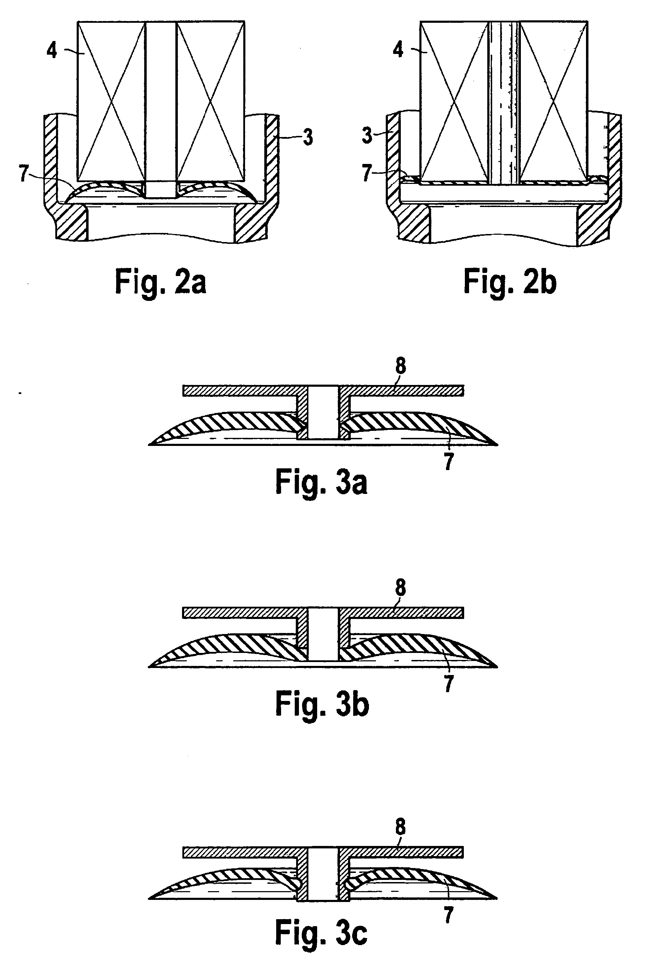

Es ist hier eine Rücklaufsperrmembran 7 an einer Endscheibe 8 des Filterelements 4, beispielsweise aus einem Elastomer, angeordnet, die rohseitig den Flüssigkeitsstrom freigibt, jedoch bei einer Unterbrechung des Stroms, zum Beispiel bei einem Stillstand des Verbrennungsmotors, einen Rückstrom in den Zulaufkanal 1 durch axiale oder radiale Anlage der Membran am Filtergehäuse verhindert. Aus Figur 2a und 2b sind prinzipielle Mechanismen der Funktionsweise solcher Rücklaufsperrmembranen 7 zu entnehmen, die Figur 2a zeigt eine axiale und die Figur 2b eine radiale Abdichtung.

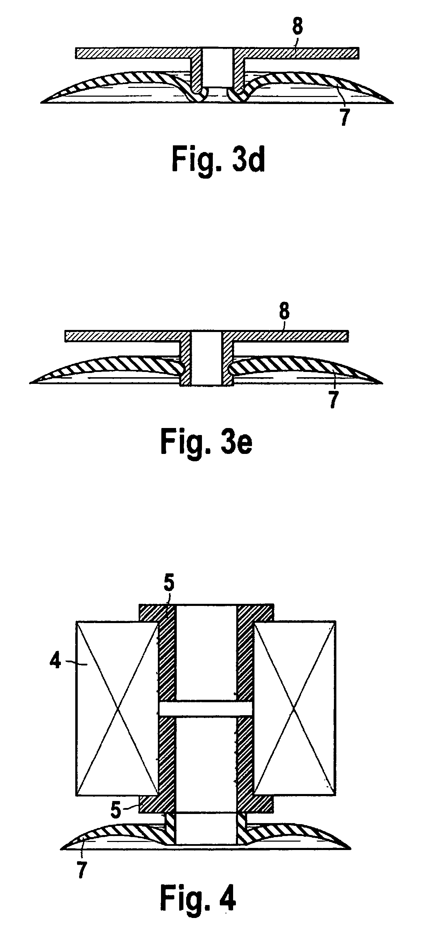

Figur 3a bis 3e zeigt jeweils unterschiedliche Ausführungsformen der Rücklaufsperrmembranen 7, die an einer Endscheibe 8 angebracht sind. Die Figuren 3a und 3b zeigen verklebte, verschweißte oder mit einem Zwei-Komponenten-Verfahren angefügte Rücklaufsperrmembranen 7 und die Figuren 3c bis 3e zeigen jeweils mit der Endscheibe 8 verknüpfte Rücklaufsperrmembranen 7.

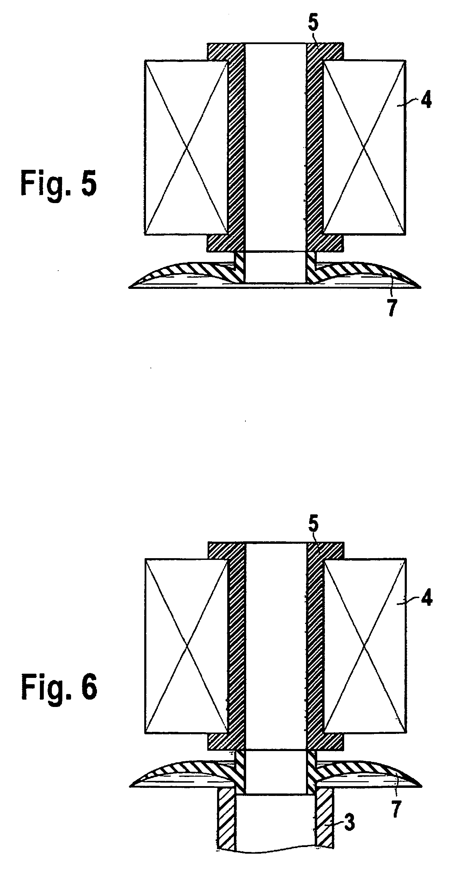

Aus Figur 4 ist eine Anbringung der Rücklaufsperrmembranen 7 an einem zweiteiligen Mittelrohr 5 und aus Figur 5 und Figur 6 ist jeweils eine Anbringung der Rücklaufsperrmembranen 7 an einem einteiligen Mittelrohr 5 zu entnehmen.

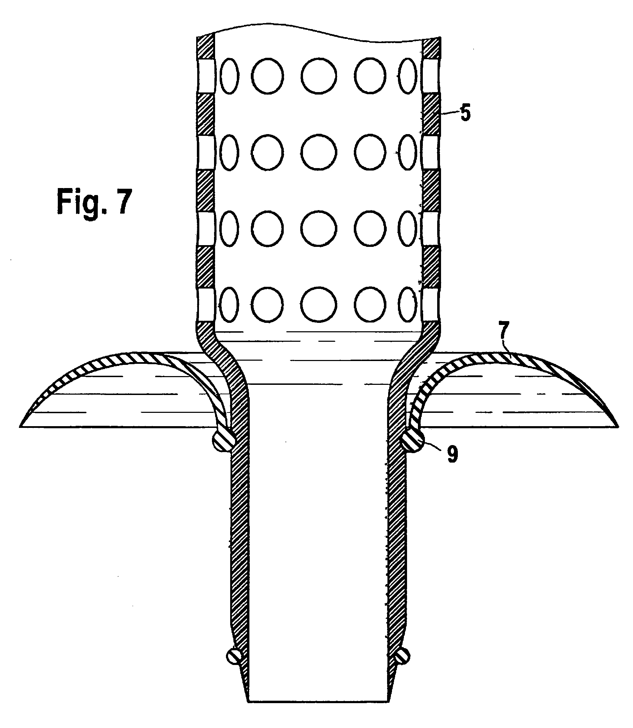

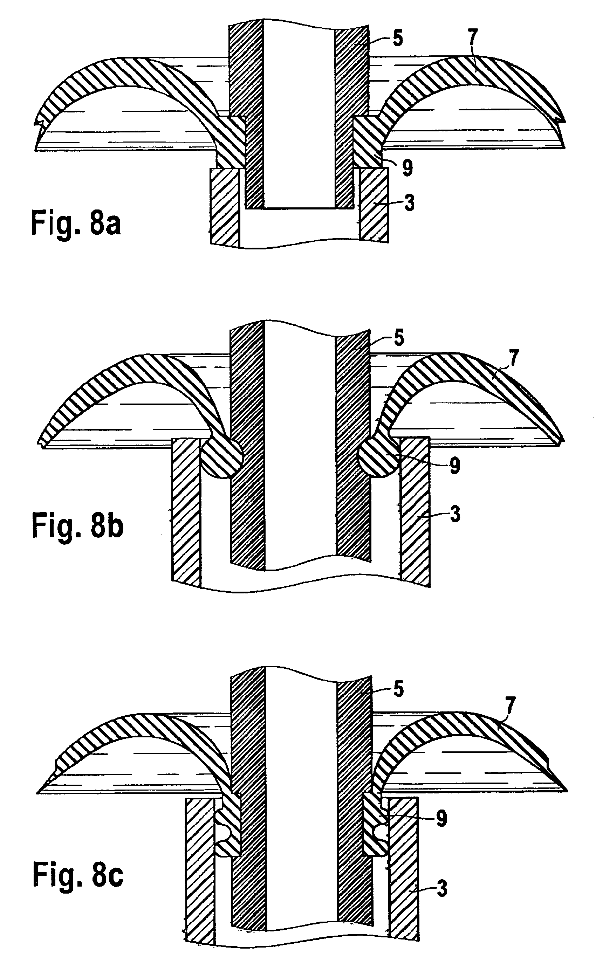

Figur 7 zeigt ein Ausführungsbeispiel, bei dem die Rücklaufsperrmembran 7 am Mittelrohr 5 derart angebracht ist, das sich eine Dichtungswulst 9 ergibt, mit der eine radiale Abdichtung zwischen dem Mittelrohr 5 und dem unteren Gehäuseteil 3 (vgl. Figur 1) durchführen lässt. Aus Figur 8a ist auch die Möglichkeit einer axialen Abdichtung mit dem Dichtungswulst 9 und aus Figur 8b und 8c sind weitere Dichtungsmöglichkeiten ergänzend zu der Anordnung nach der Figur 7 zu entnehmen.

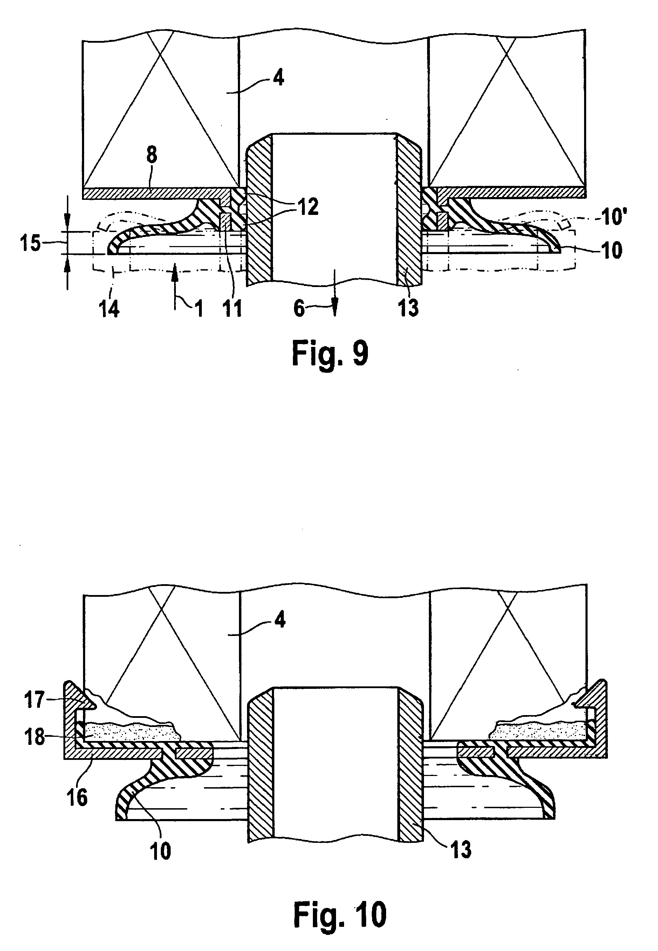

In Figur 9 ist ergänzend zu den Darstellungen nach den Figuren 3a bis 3c gezeigt, wie bei einer Endscheibe 8 als Funktionsträger eine Rücklaufsperrmembran 10 an der Endscheibe 8 und insbesondere an einem Ansatz als axialen Fortsatz 11 der Endscheibe 8 angebracht werden kann. Auch hier ist dieser Bereich der Endscheibe 8 mit einem Elastomer zur Bildung der Rücklaufsperrmembran 10 umspritzt, wobei hier auch noch eine radiale Dichtung 12 zur Abdichtung an einem inneren Dichtdom 13 integriert werden kann. Der axiale Fortsatz 11 ist dabei in seiner Länge so bemessen, dass mit diesem bei Anlage auf einem Absatz 14 des Filtergehäuses ein Anschlag gebildet ist, so dass durch den verbleibenden Raum (Pfeil 15) eine vorgebbare Vorspannung bei der Anlage der Rücklaufsperrmembran 10 an der Dichtungsfläche des Filtergehäuses herstellbar ist.

Figur 10 zeigt noch eine alternative Ausführungsform einer Endscheibe 16 als Funktionsträger, bei der außen sogenannte Schnappnasen 17 angebracht worden sind, so dass die Rücklaufsperrmembran 10 mit der Endscheibe 16 mittels einer Schnappverbindung mit dem Filterelement 4 angefügt werden kann. Beim Aufschnappen bzw. beim axialen Aufschieben auf die Endfläche des Filterelements 4 greifen die Schnappnasen 17 seitlich in die Zwischenräume der gefalteten Filterbahnen des Filterelements 4 über einer axialen Verklebung 18 der Filterbahnen ein und stellen somit eine lösbare Verbindung her.

Dabei können auch elastomere Erweiterungen der Rücklaufsperrmembran 10 radial und/oder axial zwischen der Endscheibe 16,17 und dem Filterelement 4 angespritzt werden, die zur Abdichtung bei der Montage eingequetscht werden.

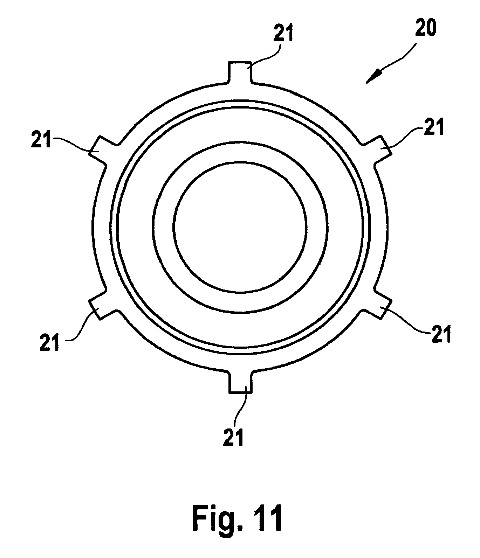

Eine Endscheibe 20 nach Figur 11 ist so ausgeführt, dass hier in Abwandlung zu der Endscheibe 16 nach der Figur 10 radiale Nasen 21 angebracht sind, die seitlich in entsprechende, hier nicht gezeigte Ausnehmungen des Filtergehäuses, wie es beispielsweise mit dem Unterteil 3 nach den Figuren 2a und 2b gezeigt ist, eingreifen. Die Ausnehmungen sind hierbei so bemessen, dass mit diesen bei Anlage der radialen Nasen 21 ein Anschlag gebildet ist, so dass durch den verbleibenden Raum eine vorgebbare Vorspannung bei der Anlage der Rücklaufsperrmembran an der Dichtungsfläche des Filtergehäuses herstellbar ist.

### Gewerbliche Anwendbarkeit

Die Erfindung ist beispielsweise in der Kraftfahrzeugtechnik einsetzbar, insbesondere bei Filteranordnung für Flüssigkeiten, insbesondere für Öl oder Kraftstoff.

## Patentansprüche

1. Filteranordnung für Flüssigkeiten mit einem zylindrischen Filterelement (4), das axial in ein Filtergehäuse (2, 3) einführbar ist, wobei das Filterelement (4) nach der Montage den Verschluss einer Rücklaufvorrichtung für die zu filternde Rohflüssigkeit mit mindestens einer im Filtergehäuse (2,3) gehaltenen Dichtung als Rücklaufsperrmembran (7) bewirkt, wobei die Rücklaufsperrmembran (7) an einem Funktionsträger (5; 8) der Filteranordnung derart angebracht ist, dass sie eine axiale und/oder radiale Abdichtung der Roh- und Reinseite der Filteranordnung bewirkt, **dadurch gekennzeichnet, dass** der Funktionsträger eine fest oder mittels einer Schnappverbindung mit dem Filterelement (4) verbundene Endscheibe (8) ist, an das die Rücklaufsperrmembran (7) angefügt ist.

2. Filteranordnung nach Anspruch 1, **dadurch gekennzeichnet, dass** die Rücklaufsperrmembran (7) aus einem Elastomer gebildet ist, das an einem axialen Fortsatz des Funktionsträgers derart angebracht ist, dass sich eine axial in vorgegebenen Grenzen flexible Anlage der Rücklaufsperrmembran (7) an Dichtungsflächen ergibt.

3. Filteranordnung nach Anspruch 2, **dadurch gekennzeichnet, dass** der axiale Fortsatz (11) des Funktionsträgers (8) so bemessen ist, dass mit diesem bei Anlage auf einem Absatz (14) des Filtergehäuses ein Anschlag gebildet ist, so dass durch die Länge des Fortsatzes (11) eine vorgebbare Vorspannung der an der Dichtungsfläche anliegenden Rücklaufsperrmembran (10) bewirkbar ist.

4. Filteranordnung nach Anspruch 1, **dadurch gekennzeichnet, dass** der Funktionsträger eine fest mit dem Filterelement verbundene Endscheibe (20) ist, an das die Rücklaufsperrmembran angefügt ist, wobei die Endscheibe (20) so ausgeführt ist, dass hier radiale Nasen (21) angebracht sind, die seitlich in entsprechende Ausnehmungen des Filtergehäuses eingreifen und dass die Ausnehmungen hierbei so bemessen sind, dass mit diesen bei Anlage der radialen Nasen (21) ein Anschlag gebildet ist, damit dass durch den verbleibenden Raum eine vorgebbare Vorspannung bei der Anlage der Rücklaufsperrmembran an der Dichtungsfläche des Filtergehäuses herstellbar ist.

5. Filteranordnung nach Anspruch 1, 2 oder 3, **dadurch gekennzeichnet, dass** der Funktionsträger eine mittels einer Schnappverbindung mit dem Filterelement (4) verbundene Endscheibe (16) ist, an das die Rücklaufsperrmembran (7) angefügt ist, wobei radiale Schnappnasen (17) der Endscheibe (16) seitlich in die Zwischenräume der gefalteten Filterbahnen des Filterelements (4) über der axialen Verklebung der Filterbahnen eingreifen und dabei Erweiterungen der Rücklaufsperrmembran (10) radial und/oder axial zwischen dem Funktionsträger (16,17) und dem Filterelement (4) zur Abdichtung einquetschen.

6. Filteranordnung nach einem der vorhergehenden Ansprüche, **dadurch gekennzeichnet, dass** die Rücklaufsperrmembran (7) mit dem Funktionsträger (5; 8) durch kleben, verschweißen oder mittels eines Zwei-Komponenten-Verfahrens fest verbunden ist.

7. Filteranordnung nach einem der Ansprüche 1 bis 5, dadurch gelcennzeichnet, dass die Rücklaufsperrmembran (7) mit dem Funktionsträger (5; 8) durch Einknüpfen lösbar verbunden ist.

## Claims

1. Filter assembly for liquids with a cylindrical filter element (4) which is axially insertable into ta filter housing (2, 3), the filter element (4) causing after assembly the closure of an anti-drain device for the raw liquid to be filtered with at least one sealing held in the filter housing (2, 3) as anti-drain membrane (7), the anti-drain membrane (7) being attached at a functional support (5; 8) of the filter assembly in such a way that it causes an axial and/or radial sealing of the dirty and clean side of the filter assembly, **characterized in that** the functional support is an end plate (8) firmly connected or fixed by means of a snap-fit connection (8) with the filter element (4) to which the anti-drain membrane (7) is attached.

2. Filter assembly according to claim 1, **characterized in that** the anti-drain membrane (7) is made of an elastomere which is attached at an axial extension of the functional support in such a way that an axially flexible contact of the anti-drain membrane (7) with sealing surfaces is realized within the predefined limits.

3. Filter assembly according to claim 2, **characterized in that** the axial extension (11) of the functional support (8) is dimensioned in such a way that it forms a stop when contacting a shoulder (14) of the filter housing so that due to the length of the extension (11) a predefinable pretension of the anti-drain membrane contacting the sealing surface can be generated.

4. Filter assembly according to claim 1, **characterized in that** the functional support is an end plate (20) firmly connected with the filter element and to which the anti-drain membrane is attached, the end plate (20) being designed in such a way that radial noses (21) are fixed here which engage laterally in the corresponding recesses of the filter housing, and that the recesses are dimensioned in such a way that they form a stop when the radial noses (21) come into contact so that thanks to the remaining space a predefinable pretension can be generated when the anti-drain membrane contacts the sealing surface of the filter housing.

5. Filter assembly according to claim1, 2 or 3, **characterized in that** the functional support is an end plate (16) to which the anti-drain membrane (7) is attached and which is connected with the filter element (4) by means of a snap-fit connection, the radial snap-fit noses (17) of the end plate (16) engaging laterally into the gaps of the pleated filter webs of the filter element (4) above the axial adhesion of the filter webs and thereby squeezing extensions of the anti-drain membrane (10) radially and/or axially between the functional support (16, 17) and the filter element (4) for the purpose of sealing.

6. Filter assembly according to one of the above claims, **characterized in that** the anti-drain membrane (7) is firmly connected with the functional support (5; 8) by gluing, welding or by means of a two-component process.

7. Filter assembly according to one of the claims 1 to 5, **characterized in that** the anti-drain membrane (7) is detachably connected with the functional support (5; 8) by knotting it.

## Revendications

1. Ensemble de filtre pour liquides, avec un élément filtrant cylindrique (4) pouvant être introduit en sens axial dans un boîtier de filtre (2, 3), l'élément filtrant (4) formant, après le montage, la fermeture d'un dispositif de retour pour le liquide brut à filtrer, avec au moins un joint maintenu dans le boîtier de filtre (2, 3) en tant que membrane anti-retour (7), la membrane anti-retour (7) étant montée sur un support fonctionnel (5 ; 8) de l'ensemble de filtre de manière à ce qu'elle assure une étanchéité axiale et/ou radiale du côté brut et du côté pur de l'ensemble de filtre, **caractérisé en ce que** le support fonctionnel est un disque d'extrémité (8) relié de manière fixe ou au moyen d'un assemblage encliquetable à l'élément filtrant (4) et avec lequel la membrane anti-retour (7) est assemblée.

2. Ensemble de filtre selon la revendication 1, **caractérisé en ce que** la membrane anti-retour (7) est faite dans un élastomère qui est monté sur un prolongement axial du support fonctionnel de manière à ce qu'il se forme un contact flexible en sens axial, dans des limites prescrites, de la membrane anti-retour (7) sur des surfaces d'étanchéité.

3. Ensemble de filtre selon la revendication 2, **caractérisé en ce que** le prolongement axial (11) du support fonctionnel (8) est dimensionné de manière à ce qu'il se forme avec lui une butée en cas de contact sur un épaulement (14) du boîtier de filtre, de sorte que, en raison de la longueur du prolongement (11), une prétension prédéfinissable de la membrane anti-retour (10) en contact sur la surface d'étanchéité peut être générée.

4. Ensemble de filtre selon la revendication 1, **caractérisé en ce que** le support fonctionnel (8) est un disque d'extrémité (20) relié de manière fixe à l'élément filtrant et avec lequel la membrane anti-retour est assemblée, le disque d'extrémité (20) étant conçu de telle manière que des ergots radiaux (21) étant en prise latéralement dans des creux correspondants du boîtier de filtre y sont disposés et que, ce faisant, les creux sont dimensionnés de manière à ce qu'il se forme une butée avec eux en cas de contact avec les ergots radiaux (21), de sorte que, en raison de l'espace restant, une prétension prédéfinissable puisse être générée en cas de contact de la membrane anti-retour de sur la surface d'étanchéité.

5. Ensemble de filtre selon la revendication 1, 2 ou 3, **caractérisé en ce que** le support fonctionnel est un disque d'extrémité (16) relié au moyen d'un assemblage encliquetable à l'élément filtrant (4) et avec lequel la membrane anti-retour (7) est assemblée, des ergots encliquetables radiaux (17) du disque d'extrémité (16) étant en prise latéralement dans les interstices des bandes filtrantes pliées de l'élément filtrant (4) au-dessus de la surface axiale collée des bandes filtrantes et, ce faisant, écrasent, à des fins d'étanchéité, des extensions de la membrane anti-retour (10) en sens radial et/ou axial entre le support fonctionnel (16, 17) et l'élément filtrant (4).

6. Ensemble de filtre selon l'une des revendications précédentes, **caractérisé en ce que** la membrane anti-retour (7) est assemblée de manière fixe avec le support fonctionnel (5 ; 8) par collage, soudage ou au moyen d'un procédé bicomposant.

7. Ensemble de filtre selon l'une des revendications 1 à 5, **caractérisé en ce que** la membrane anti-retour (7) est assemblée de manière amovible avec le support fonctionnel (5 ; 8) par nouage.
